# EUROPÄISCHE PATENTANMELDUNG

(11) **EP 0 984 549 A1**
(43) Veröffentlichungstag der Anmeldung: **08.03.2000**
(21) Anmeldenummer: 97118688.7
(22) Anmeldetag: 28.10.1997
(51) Int. Cl.: H02K 26/00, F02D 11/10

(54) **Torquemotor, als elektrischer Direktantrieb für ein Stellelement mit von 0 bis 90 Verstellweg zur Verstellung von Drosselklappen und Drallklappen als Füllungsregelung beim KFZ-Motor**

(71) Anmelder: Hohoff, Caspar, 40217 Düsseldorf (DE)
(72) Erfinder: Hohoff, Caspar, 40217 Düsseldorf (DE)

(57) **Zusammenfassung**

Die in der Anmeldung beschriebene Technologie des Motors geht davon aus, dass die schnelle Verstellreaktion und die Drehkraft erfindungsgemäss auf die Anordnung der Magnete und die genaue Kenntnis des dynamischen Verhaltens solcher Magnete basiert.

Die für die äusserst ungünstigen Temperaturbedingungen dem Motor abverlangten Drehmomente und besonders ein ziemlich konstant zu haltendes und gegen Vibration anstehendes Drehmoment, unter besonderer Beachtung der kurzen in ms auftretenden Schaltzeiten,
bedingen ein starkes und robustes Magnetsystem, das für den Torquemotor ausgewählt wurde.

Unerlässlich ist der Schutz dieser Magnete, sprich des Motorinneren gegen die Einwirkung einer Anzahl von Sprühnebeln und Dämpfen, teils aggressiver, chemischer Natur, mittels spezieller Materialwahl, z.B. für das Gehäuse oder geeignet, den Anforderungen entsprechender Beaufschlagung mittels Schutzüberzügen zu entsprechen.

Der Torquemotor besteht aus dem Rotor mit Magneten, der genauen Lagerung des Rotors in zwei Lagerplatinen, dem Stator, bestehend aus dem Blechpaket mit einer oder zwei Spulen für die Bestromung,
wobei zwischen dem Stator und Rotor ein bestimmter Luftspalt besteht, der bedeutungsvoll ist und auf die dem Motor zugeschriebenen Eigenschaften besonders beim Einbau von Stator und Rotor in ein Fremdgehäuse von entscheidender Bedeutung ist.

Bei der Herstellung und Konstruktion des Torquemotors, basieren die erzielten und in der Anmeldung beschriebenen Eigenschaften, besonders die Magnetsorte und Gestaltung zum Teil nur auf Berechnungen oder eine Computersimulation, vielmehr ist die praxisgerechte Vorgehensweise auf experimentiellem Wege durchgeführt worden und Versuchswerte verbessert worden, was zum Gegenstand der Anmeldung führt und realistischen Charakter hat.

## Beschreibung

Die Erfindung bezieht sich auf einen Torquemotor als Antriebsmotor für ein Stellelement zur Veränderung des Motorfüllungsgrades zum Beispiel beim Automobilmotor, durch Verstellung einer Drosselklappe oder einer Ventilsteuerung, oder zum Zwecke der Leerlaufdrehzahlregelung, nach von einer Steuerelectronic - entsprechend dem Betriebszustand des Motors-festgelegten Sollwerten, wobei auch vorrangig die Steuerelectronic Impulse an das Stellelement, in diesem Fall an den erfindungsgemässen Torquemotor abgibt, die der sofortigen Geschwindigkeitsbegrenzung oder der Geschwindigkeitsherabsetzung, oder der Innehaltung einer Zwangsdistanz beim Automobil, Befehlscharakter geben können.

Drosselklappen oder Ventilsteurungen, oder Bypassregelungen oder Leerlaufdrehzahlregler finden seit Bestehen der Motorik Anwendung und werden mittels Gleichstromm-Servo- oder seit Impulsgabe durch electronische Ansteurungen, mit Schrittmotoren, mit oder ohne ein vorgeschaltetes Getriebe oder Gestänge, betätigt.

Durch die stetig wachsenden Anforderungen in Bezug auf den schadstoffarmen Abgasausstoss, Wirtschaftlichkeit, zum Beispiel der Forderung nach dem 5 oder 3-Literauto, oder den Sicherheitsanforderungen wie ASD-Automatisches Sperrdifferential oder ASC/MSR - Stabilitätskontrolle, oder DSC / ESP Dynamische Driftkontrolle, ist die Fusion von microelectronic/micromecanic unverzichtbare Ein-und Ausgangsbefehlsgabe auf den Antriebsmotor.

Schrittmotoren erfüllen in begrenztem Umfange die Aufgaben, die der schnellen Bewegung der Stellelemente dienen können. Nachteile jedoch liegen im begrenzten Drehmoment, besonders als Startmoment, oder gar im Temperaturtiefpunkt von - 40°C beim "Losreißmoment", neben den Kosten auch für eine Digitalansteurung. Der Drehmomentabfall bei hohen Temperaturen von 145 ° C ist zudem ein Nachteil dieses Antriebsmotors.

Gegenstand der vorliegenden Erfindung ist ein Torquemotor, bestehend aus einem Stator mit segmentartig aufgebrachten Magnetschalen aus Spezialmagnetmaterial, wie NdFeB bonded magnets, oder 4-E Magnetmaterial, oder Neodynium, oder Ferriten, wenn die Bauform und Größe die Verwendung dieses Materials es zulassen, wobei die Segmente unterschiedliche Abmaße besitzen und zudem bestimmt richtungsorientiert sind, um zum Beispiel einem Verstellweg von 90 ° ein konstantes - auch gegen eine Rückzugfeder gerichtetes - Drehmoment entgegenzuhalten, oder bei stromlosem Antrieb eine definierte Rastposition magnetisch zu realisieren, oder auch die Nullposition zu erreichen bei einer äusseren Belastung von einer festgelegten Lastkennlinie im Nulldurchgang, z.B. im vorliegenden Fall bei einer Drosselklappenverstellung, grösser als 10 Ncm Drehmoment.

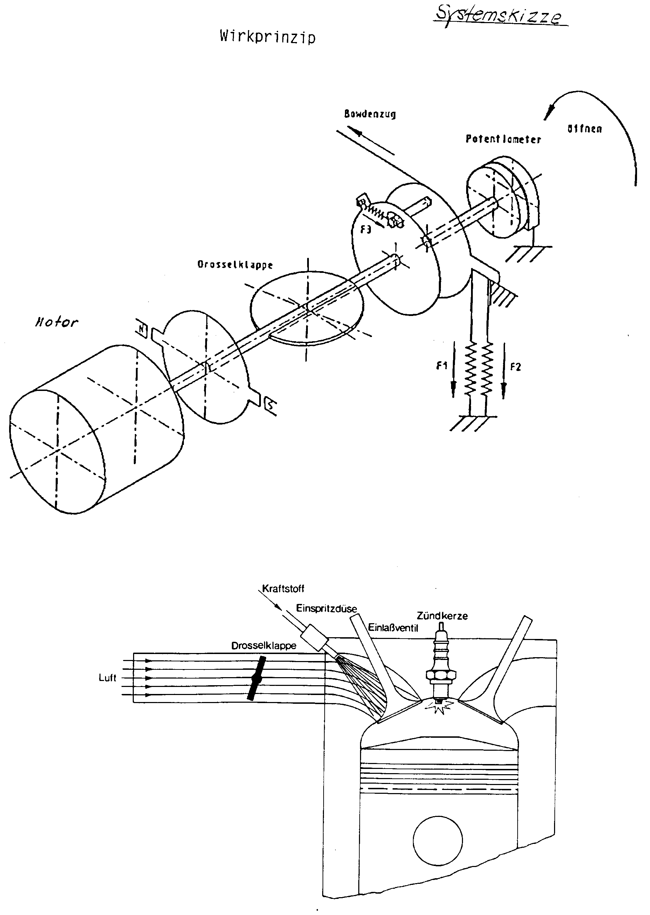

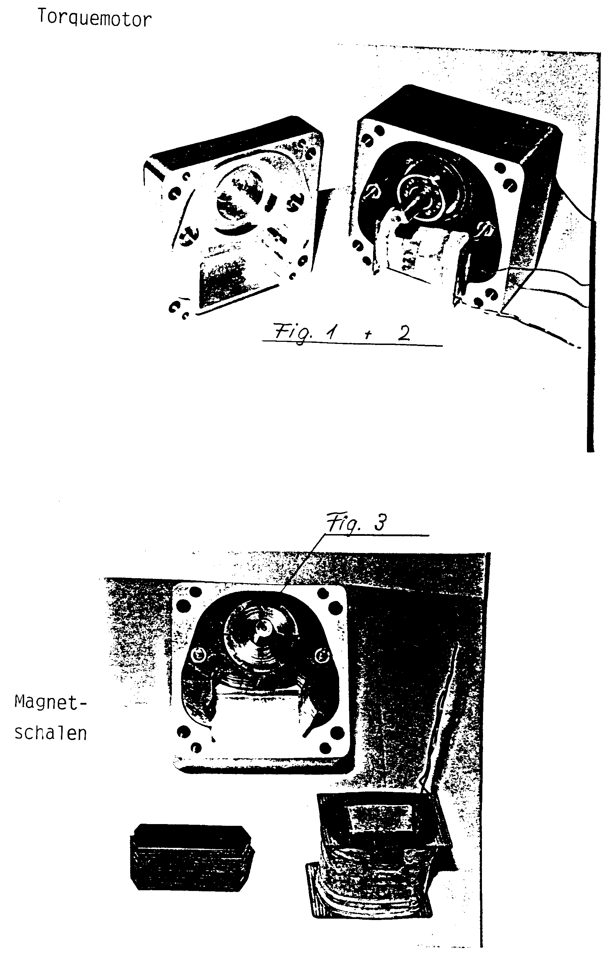

In Fig. 1 und 2 der Anlage ist die segmentartige Rotorkonfiguration dargestellt, wobei die Segmente so angeordnet sind, um einen Winkelweg von 80 ° und 10 ° - minus-Position, demnach 90 ° mit konstantem Drehmoment zu realisieren.
Die mechanische Verbindung der Rotorachse geht direkt auf die Drosselklappe oder Drosselklappenwelle.

Die Konfiguration des Stators und die Einbringung der Spule zeigt ebenso die Fig. 1 und 2 der Anlage.
Erfindungsgemäss ist diese Statorkonfiguration, wobei die Paketlagenanordnung die Segmentierung der Läufermagnete unterstützt, um in einem Winkelbereich von 90 ° die der Torquemotor von 0 bis 90 ° hin/zurückläuft, das in diesem Bereich fixierte Nenndrehmoment konstant und zum Beispiel auch gegen eine Vibration von etwa 12 g bis 2ooo Hz gehalten werden kann.

Die Zuordnung der Rotorsegmente zur Statormasse in der Rastposition - elektrische Nullposition -ist zudem mit erfindungsgemäss und garantiert die Anfangsverstellgeschwindigkeit z.B. 25 ° in 50 ms bei Raumtemperatur und gegen eine äussere Belastung von 30 Ncm bei 6V / 2 A im vorliegenden Drosselstellerbetrieb.

Fig. 1 und 2 zeigt den Torqumotor in einem Gehäuse mit zwei Kugellagerungen, wobei das Gehäuse aus Alu oder Kunststoff hergestellt werden kann.
Verschiedene Drosselklappengehäuse sehen jedoch auch den Einbau von Stator und Rotor im Direkteinbau und ohne ein Motorgehäuse für den Motor vor. Die Gründe liegen im begrenzten Raum der zur Verfügung steht, ein weiterer Grund liegt in der als ungünstig zu bezeichnenden dreifach Lagerung der Achse, sowie auch Kostenersparnisse.

Um durch die bisherige Erfindung, wie beschrieben, diesem Vorteil gerecht zu werden, wurde der Torquemotor für diesen Einbau ohne ein eigenes Gehäuse modifiziert.

Die Fig. 3 zeigt die Segmentanbringung der Magnete, wie unter RZ 20 Bl. 1 aufgeführt, im Stator, wobei durch diese Anordnung, eine Drehmomenterhöhung erzielt wird und durch die Konfiguration der Packetierung, ebenso über den Verstellweg von 90°, ein gleichbleibendes Drehmoment erzeugt und gehalten wird.

Die kreisrunde Konfiguration des Stators und die Zweispulenanordnung im Rotor, gestattet den Direkteinbau in ein beigestelltes Gehäuse für Drosselklappen oder Leerluftregelung im unteren Drosselklappenanschlag, oder einem separaten Leerluftregler.

Die in Fig. 3 vermerkten Randwerte beziehen sich auf eine reale Spezifikation, wie diese für eine E-Gasregelung gültig ist, wobei diese Werte nicht Gegenstand der erfindungsgemässen Neurung sind.

Durch die zwingenden Techniken, die im Automobilbau heute gelten, sind weitere Vorteile des Torquemotors als Antrieb für den Motorfüllungssteller aufzuweisen, die mit einem Schrittmotor oder Gleichstrommotor mit Getriebe nicht erreicht werden.

Die Antriebs-Schlupfregelung reduziert, wenn die Gefahr des Durchdrehens besteht, (Gaspedaleffekt), mittels einer mechanischen Stellwertüberlagerung die Drosselklappenöffnung, was schnell, z.B. in einer kritischen Fahrsituation geschehen kann und das Stellsystem muss schnell reagieren.
Ein übergeordnetes Steuergerät, welches die kritischen Impulse aufnimmt, bestimmt den Drosselklappensollwert.
Ist die Klappenstellung eingestellt, misst ein Wirbelstromsensor den Stellwinkel der Klappe und gib diesen sofort an das IC des Reglers weiter und zwar zyklisch, also sehr schnell.

Zur Erfüllung des ASR-Verhaltens ist der Soll/Istwert ohne Sprünge und Verzögerung den Anforderungen daher gerecht, was nur mit einem direkt auf die Drosselklappe wirkenden Motor, ohne Getriebe erreicht wird.

Beim automatischen Sperrdiferential wird, sobald ein Rad durchdreht, das Differential der Antriebsachse gesperrt, der Motor erhält einen Sollwert über den Füllungsgrad und überträgt sofort seine Kraft gleichmässig auf beide Räder, - der Wagen kann weiterfahren.

Die Stabilitätskontrolle reduziert beim Durchdrehen der Räder ( Längsschlupf ) die Motorfüllung mittels Sofortverstellung der Drosselklappe.

Die Dynamische Driftkontrolle erkennt eine Querdriftung, meldet die einzelne Radgeschwindigkeit analog zum Lenkwinkel, bremst die einzelnen Räder ab und meldet einen Sollwert für den Füllungssteller des Motors.

Sofern der Torquemotor für den Leerluftregler/Füller betrieben wird, werden die Impulsübertragungen z.B. durch eine Druckmessdose zur Messung des Unterdrucks im Ansaugsystem des Motors an das Stellglied abgegeben, die Luftmenge wird errechnet die der Motor ansaugen soll, dann wird die Leerfluftfüllung, über den mit dem Torquemotor betriebenen Leerluftsteller vorgenommen.

Die sensorgesteuerte Distanzhaltung beim KFZ zum vorausfahrenden Fahrzeug schaltet das Gaspedal in Zyklen aus, wobei der durch den Torquemotor betriebene Stellvorgang in Abhängigkeit zur Geschwindigkeit/Bremsauswirkung/Stabilitätskontrolle und Dauer der Zyklen, äusserst schnell erfolgen muss.

## Patentansprüche

1. Motorischer Direktantrieb für ein Stellelement zur Veränderung des Motorfüllungsgrades, bestehend aus Rotor mit starken, speziell. Magnetsegmenten und einem Stator bestimmter Konfiguration und Paketanordnung, wodurch in einem bestimmten Drehbereich ein starkes und gleichbleibendes Drehmoment, trotz einwirkender variabler Gegenkraft erzielt wird und das Drehmoment, übersetzt mit "torque", dem motorischen Direktantrieb den Namen Torquemotor verleiht.

2. Torquemotor, nach Anspruch 1 gekennzeichnet, zum Antrieb einer Drosselklappe, oder einer Ventilsteuerung, wobei die Drehbewegung mittels einer Spindel, oder einer Zahnstange oder eines Hebel-Segment-oder Exzentergestänges, auf eine Längsbewegung - Hub - übertragen wird, wobei diese Verstellung auch auf einen Leerluftsteller, ein Ventil, Bypassregler, übertragen werden kann.

3. Torquemotor, nach Anspruch 1 und 2 gekennzeichnet und dadurch für die unter 1 und 2 benannte Aufgabenstellung im besonderen Maße geeignet, dass zum Abfangen plötzlicher Belastungsänderungen im Bereich einer Temperatur von minus 40 ° C und 140 °C schnell und in Millisekundenzeit der Verstellvorgang ausgelöst wird.

4. Torquemotor nach Anspruch 1 dadurch gekennzeichnet, dass nach Solleinstellung des Stellelements, eine Haltekraft gegen eine Erschütterung und Vibration, wie unter RZ 10 / Bl. 2 angegeben, über das magnetische Rast / Restmoment / bestromt / unbestromt, erzielt wird.

5. Torquemotor dadurch gekennzeichnet, dass Stator und Rotor in einem Gehäuse gelagert und eingebaut sind und als eine solche Einheit als Antrieb für ein Stellelement dient.

6. Torquemotor dadurch gekennzeichnet, dass Stator und Rotor, wie für eine vorbezeichnete Einheit mit Gehäuse präzisiert sind, jedoch als Einzelteile in ein anderes Gehäuse eingebaut sind, z.B.in ein Drosselklappengehäuse, oder Leerluftsteller, oder in ein Stellelement anderer Aufgabenstellung.

7. Torquemotor dadurch gekennzeichnet, das die Magnetsegmente unterschiedliche Segmentmaße haben können und diese für die Rotoranordnung mit dem Rohling des Rotors verbunden sind und zwar in bestimmt wirkender Anordnung, sowie dadurch gekennzeichnet, dass die Magnetsegmente, oder auch Ringmagnete, bestimmter Magnetsorte, als Statoranordnung im Inneren des Stators angebracht sind.

8. Torquemotor nach dem Hauptanspruch dadurch gekennzeichnet, daß durch die stirnseitige Verstellung von Drallklappen mehrere, in Rheihe / hintereinander liegende Drallklappen im Ansaugstutzen synchron verstellt werden, wie Fig. 4 und Fig. 5 dieses darstellt, wobei in Abhängigkeit der Ansteurungszyklen, Direktimpulse auf den Auf-ZU-Weg der Drallklappen übertragen werden.

9. Torquemotor dadurch gekennzeichnet, dass die Stellzeiten über die Ansteurungsausgänge welche in Abhängigkeit der sensorgesteuerten Eingänge eine schnelle Stellungsregelung erfordern, für den Stellweg von 8o° weniger als 30 ms benötigen so dass die im Drall, in den Bereich des oberen Elektrodenbereichs der Zündkerze eingebrachten Luftanteile, dem Einspritzrhytmus von Brennstoff/Gasolin entsprechen.

10. Torquemotor dadurch gekennzeichnet, dass der kleinste Verstellweg pro Impuls bei 1° liegt und gegen Vibration durch das magnetische Rastmoment auch gegen die Kraft der mechanischen Rückzugsfeder, oder einer magnetischen Feder im bestromten Zustand die Haltestellung hält, wobei die mechanische Nullstellung, demnach die Zu-Stellung der Drallklappe / Drosselklappe, durch die Federzugwirkung bei ausgeschaltetem Strom sichergestellt, also nullpositioniert ist.
